# EUROPÄISCHE PATENTSCHRIFT

(11) **EP 1 083 380 B1**
(45) Veröffentlichungstag und Bekanntmachung des Hinweises auf die Patenterteilung: **06.11.2002**
(21) Anmeldenummer: 00118998.4
(22) Anmeldetag: 01.09.2000
(51) Int. Cl.: F16M 11/04

(54) **Kameraplatte**
Supporting plate for camera
Plaque-support de caméra

(30) Priorität: 08.09.1999 DE 19942925; 08.09.1999 DE 19942924
(43) Veröffentlichungstag der Anmeldung: 14.03.2001
(73) Patentinhaber: Boudard, Pierre Dipl.-Ing., 82031 Grünwald (DE)
(72) Erfinder: Boudard, Pierre Dipl.-Ing., 82031 Grünwald (DE)
(74) Vertreter: Grünecker, Kinkeldey, Stockmair & Schwanhäusser Anwaltssozietät

(56) Entgegenhaltungen:
- DE-U- 29 613 027
- US-A- 3 356 325
- US-A- 4 398 815

## Beschreibung

Die Erfindung betrifft eine Kameraplatte, ein Kamerastativ, eine tragbare Kamera, ein Verbindungselement zur Verbindung einer tragbaren Kamera mit einer Kameraplatte, ein Schnittstellensystem zur mechanischen Befestigung einer Kamera. Tragbare Kameras können über eine solche mechanische Schnittstelle, die sogenannte Kameraplatte, fest mit einem Stativ oder einem Kameraschwenkkopf verbunden werden.

Kameraplatten dienen insbesondere dazu, tragbare Kameras in kurzer Zeit mechanisch zu fixieren. Eine schnelle mechanische Fixierung einer Kamera ist für einen flexiblen Einsatz tragbarer Kameras erforderlich.

Grundsätzlich sind die Anforderungen an portable bzw. tragbare Kameras widersprüchlich. Einerseits müssen sie, damit sie auch mobil einsatzfähig sind, ein möglichst geringes Gewicht aufweisen. Dazu benötigen sie aber andererseits zusätzlich eine eigene Aufzeichnungsvorrichtung und eine eigene Stromversorgung. Tragbare Videokameras für den professionellen Einsatz, die sogenannten Broadcast-Kameras, besitzen im allgemeinen ein Gewicht zwischen 5 und 12 Kilogramm.

im Unterschied zu den tragbaren Kameras für den Consumer-Bereich werden an die Bildqualität, insbesondere die Auflösung des aufgezeichneten Videosignals bei Broadcast-Kameras besonders hohe Anforderungen gestellt. Bei der Qualität der aufzuzeichnenden Videosignale lassen sich grob die folgenden Stufen unterscheiden: VHS-Qualität, Distribution-Qualität und Contribution-Qualität. Im Consumer-Bereich wird versucht, eine Videosignalqualität, die möglichst besser als die von VHS-Videorecordern sein sollte, mit möglichst geringen Mitteln zu erreichen.

Im professionellen Bereich unterscheidet man zwischen Distribution- und Contribution-Qualität. Während Videosignale für die "Distribution", d.h. für die Ausstrahlung zum Fernsehteilnehmer, gegenüber der VHS-Qualität eine sehr viel bessere Bildqualität aufweisen, müssen Videosignale, die für die Zuspielung, d.h. für die "Contribution" geeignet sind, noch höhere Anforderungen erfüllen. Eine wichtige Anwendung für tragbare, professionelle Videokameras ist das ENG (electronic news gathering). Beim ENG werden beispielsweise für Nachrichtensendungen am Ort des Geschehens von Kamerateams Aufnahmen gemacht, die später für eine Nachrichtensendung zusammengestellt und ausgestrahlt werden. Ein weiteres Einsatzgebiet für tragbare Videokameras mit hohen Qualitätsanforderungen ist die EFP (electronic field production). In beiden Fällen wird an die Qualität der Videosignale, inbesondere die Auflösung, eine hohe Anforderung gestellt, da die Videosignale nach der Aufnahme häufig noch mehrere Bildverarbeitungsstufen durchlaufen müssen. Bei solchen Bildverarbeitungsstufen handelt es sich in der Regel um eine Filmbearbeitung bei der Bildsequenzen neu zusammengestellt werden, überblendet werden, geschnitten werden, mit Untertiteln versehen werden usw. Jede dieser Stufen führt in der Regel zu einer Qualitätsverschlechterung des Bildsignals. Damit die Qualität der schließlich zum Fernsehteilnehmer ausgestrahlten Bildsignale, ein bestimmtes Niveau nicht unterschreitet, die Distribution-Qualität, müssen an die Aufnahme besondere Anforderungen gestellt werden.

Die erhöhte Bildqualität erzeugt einen deutlich umfangreicheren Videosignalstrom als bei den Bildsignalen im Consumer-Bereich üblich. Die in Consumer-Geräten eingesetzten Aufzeichnungsverfahren für das Videosignal sind deshalb in der Regel nicht für den professionellen Bereich tauglich. Als Magnetaufzeichnungsverfahren haben sich für den Broadcast-Bereich besondere Aufzeichnungsformate durchgesetzt. Diese lassen sich auf vier Grundformen zurückführen: 1. Analog-Composite, 2. Analog-Komponenten, 3. Digital-Composite, 4. Digital-Komponenten. Dabei setzt sich die Verwendung digitaler Aufzeichnungsformate immer mehr durch. Das Digital-Composite-Signal stelle eine Digitalisierung des analogen FBAS-Signals dar. Dazu wird das Videosignal in der Regel mit einem Mehrfachen der Farbträgerfrequenz abgetastet und quantisiert. Zu solchen digitalen Magnetaufzeichnungsformaten zählen beispielsweise das D2-Format (von Ampex und Sony) sowie das D3-Format (von Panasonic). Eine höhere Bildqualität läßt sich mit der digitalen Komponenten-Technik erreichen. Dazu werden die analogen Komponentensignale (RGB) digital codiert. Zu solcnen Magnetaufzeichnungsstandards zählen beispielsweise das Format Digital Betacam (von Sony) oder das Magnetaufzeichnungsformat D6 (von Panasonic).

Die Aufzeichnung von Videosignalen auf Magnetplatten, insbesondere auf Festplatten, wie sie in jedem PC verwendet werden, gewinnt wegen ihrer zunehmenden Speicherkapazität vermehrt an Bedeutung. Vorteilhaft an diesem Aufzeichnungsmedium ist, daß sie sehr viel einfacher mit elektronischen Nachverarbeitungsgeräten, beispielsweise computergestützten Schneidevorrichtungen (non-linear editing), einsetzbar sind.

Die Vielfalt von Aufzeichnungsformaten macht, je nach Anwendung, häufig eine Umsetzung in eines oder mehrere der anderen Aufzeichnungsformate erforderlich.

Die Aufzeichnungskapazität der in der tragbaren Kamera befindlichen Aufzeichnungsvorrichtung ist nur begrenzt, insbesondere wegen der geringen Abmessungen der Kamera. Beim mobilen Einsatz ist eine Ankopplung an eine externe Aufzeichnungsvorrichtung praktisch nicht möglich. Beim ortsfesten Einsatz wird jedoch häufig eine externe Aufzeichnungsvorrichtung verwendet. Portable Videokameras besitzen deshalb externe Anschlüsse, um das Videosignal für eine externe Aufzeichnung bereitzustellen.

Bei einem mobilem Einsatz einer solchen Kamera benötigt diese nicht nur eine eigene Aufzeichnungsvorrichtung, sondern auch eine eigene Stromversorgung. Da jedoch auch die Kapazität von Akkumulatoren nur begrenzt ist, wird beim ortsfesten Betrieb, wenn möglich, ebenfalls eine externe Stromversorgung an die Kamera angeschlossen. Für diesen Zweck weist eine portable Kamera zusätzliche elektrische Anschlüsse auf.

Es werden in der Regel nicht nur elektrische Anschlüsse für eine externe Stromversorgung und für eine externe Aufzeichnungsvorrichtung bereitgestellt, sondern auch für eine Reihe von Zusatzsignalen. Zu diesen Signalen gehört beispielsweise ein gesondertes Suchersignal, ein Tonsignal oder ein Steuersignal für den Kamerabetrieb. Solche Steuersignale sind u.a. ein Kontrollsignal für die Schärfe, die Blende und ein Kamera On/Off-Signal. Mit Hilfe solcher Signale läßt sich beispielsweise eine Fernsteuerung der Kamera realisieren, so daß auch Aufnahmen ohne eine vor Ort befindliche Bedienperson möglich sind.

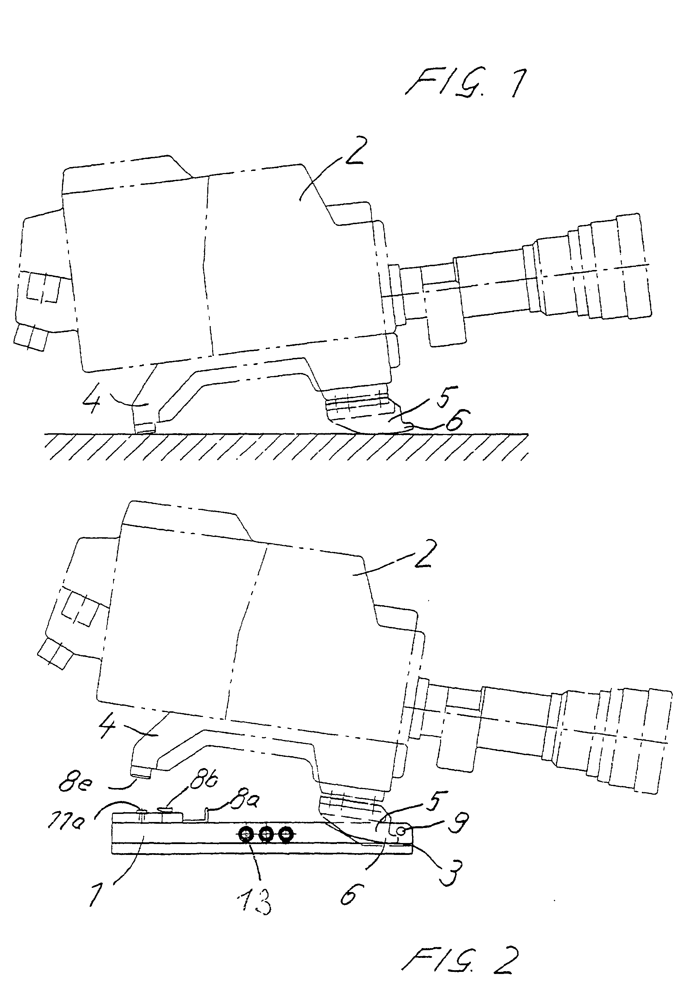

Um sowohl für einen mobilen Einsatz als auch für einen stationären Einsatz geeignet zu sein, besitzen Broadcast-Kameras an ihrer Unterseite eine Schulterstütze, die durch eine Einbuchtung im mittleren Bereich auf der Unterseite des Kameragehäuses gebildet wird. In Fig. 1 ist eine solche Broadcast-Kamera 2 dargestellt, die im unteren Bereich eine Schulterstütze 4 aufweist. Am vorderen und hinteren Ende der Unterseite des Kameragehäuses, d.h. vor und hinter der zur Aufnahme für eine Schulter ausgebildeten Einbuchtung, befinden sich die Abschnitte, die auf eine Kameraplatte aufsetzbar und mit dieser fest verbindbar sind. Auf diese Weise ist eine Broadcast-Kamera sowohl für den mobilen Einsatz als auch für den stationären Einsatz geeignet.

Damit die Kamera bei der Aufnahme vor Ort sehr schnell zwischen einem mobilen und ortsfesten Einsatz wechseln kann, werden heutzutage in der Regel Schnellspannkameraplatten eingesetzt, auf denen die Kamera sehr schnell mechanisch fixiert aber auch wieder gelöst werden kann.

Die Kameraplatte dient dabei als mechanische Schnittstelle zwischen der Kamera und einem Kameraschwenkkopf. Im allgemeinen befinden sich solche Kameraschwenkköpfe auf einem Stativ, sie können jedoch ebensogut auf einem Kran oder einer anderen mechanischen Stützvorrichtung befestigt sein. Die drehbaren Kameraschwenkköpfe erlauben, daß Kameraschwenks und Neigungen der Kamera kontrolliert möglich sind.

Herkömmliche (Schnellspann-) Kameraplatten ermöglichen, eine tragbare Kamera möglichst schnell auf einen Schwenkkopf aufzusetzen und zu fixieren und wieder von ihm zu lösen. Bei jedem Aufsetzen der Kamera muß sie zusätzlich zu der mechanischen Fixierung auf der Kameraplatte mit allen externen Leitungen verbunden werden. Entsprechend muß bei der Abnahme der Kamera nicht nur die mechanische Halterung gelöst werden, sondern es müssen auch alle angeschlossenen Leitungen wieder gelöst werden, damit die Kamera mobil einsetzbar ist.

Eine herkömmliche Kameraplatte weist zur Befestigung einer Kamera in ihrem vorderen Bereich eine Schwalbenschwanzführung auf, in die ein entsprechend komplementär ausgebildetes Einsetzteil beim Aufsetzen der Kamera auf die Kameraplatte eingeführt wird. Anschließend wird die Kamera auf der Kameraplatte mit Hilfe einer Verriegelungseinrichtung arretiert. Eine solche Kameraplatte ist beispielsweise aus DE-U1 296 13 027 bekannt. Angesichts der Größe der Kamera und des Gewichtes der Kamera ist das Einführen des Einsatzteils auf der Unterseite einer tragbaren Kamera von einer Person nur schwierig zu bewerkstelligen. Denn das "Einfädeln" des Einsatzteils in die Schwalbenschwanzführung muß genau erfolgen und erlaubt keine grobe Positionierung der Kamera auf der Kameraplatte.

Eine Vorrichtung zur mechanischen Fixierung eines Fotoapparates auf einem Stativ ist in US-A- 3 356 325 beschrieben. Dazu wird an der Unterseite des Fotoapparates ein Zwischenstück befestigt, mit dem der Fotoapparat auf die Stativplatte aufgesetzt wird. Auf der Unterseite des Zwischenstücks ist zur Befestigung der Kamera auf dem Stativ eine im wesentlichen zylindrische Scheibe angebracht. Die Scheibe ist an ihrem unteren Ende breiter ausgebildet, so dass zwischen dem breiten Ende der Scheibe und dem Zwischenstück ein Zwischenraum verbleibt. In diesen Zwischenraum greifen zwei Vorsprünge der Stativplatte ein, um die Kamera zu fixieren. Von den beiden Vorsprüngen ist ein Vorsprung schwenkbar ausgebildet, so dass er erst nach dem Aufsetzen der Kamera eingeschwenkt wird.

Eine Kamera sitzt beim Aufsetzen und Arretieren zunächst mechanisch fest auf der Kameraplatte. Jedoch kann schon eine minimale Abnutzung der Befestigungsvorrichtung an der Kameraplatte oder Kamera zu einem Spiel und damit zu einem Wackeln der Kamera auf der Kameraplatte führen.

Diesen Nachteil vermeiden Kameraplatten, die eine separate Einspannung vorsehen. Dabei wird die arretierte Kamera zusätzlich durch einen manuell betätigten Hebelmechanismus auf der Kameraplatte unter Vorspannung gesetzt, so daß die Kamera selbst bei einem minimalen Spiel in der Befestigungsvorrichtung nicht mehr wackelt. Eine solche zweistufige Befestigung auf einer Kameraplatte führt jedoch dazu, daß eine tragbare Kamera weniger flexibel einsetzbar ist. Ein Wechsel von einem mobilen zu einem ortsfesten Einsatz ist mit einer mehrstufigen Verriegelungs- und Einspannungsprozedur verbunden.

Aufgabe der Erfindung ist es, eine Kameraplatte, ein Kamerastativ, eine tragbare Kamera und ein Verbindungselement anzugeben, mit denen ein vereinfachtes und schnelleres Aufsetzen der Kamera auf eine Kameraplatte möglich ist.

Diese Aufgabe wird für eine Kameraplatte mit den Merkmalen des Patentanspruchs 1, für ein Kamerastativ mit den Merkmalen des Anspruchs 9, für eine tragbare Kamera mit den Merkmalen des Anspruchs 10 und für ein Verbindungselement mit den Merkmalen des Anspruchs 13 gelöst.

Die Erfindung beruht auf der Idee, das Aufsetzen einer Kamera auf eine Kameraplatte zu vereinfachen. Dazu wird eine Kamera zunächst nur mit einem Ende auf die Kameraplatte aufgesetzt. Dabei wird die Kamera an diesem Ende der Kameraplatte so gehalten, daß sie im wesentlichen nur noch eine Drehbewegung um den Haltepunkt zum Aufsetzen des anderen Endes auf der Kameraplatte ausführen kann. Beim Aufsetzen des gegenüberliegenden Endes wird die Kamera schließlich mittels einer automatischen Verriegelungseinrichtung arretiert.

Gemäß einer vorteilhaften Ausgestaltung der Erfindung erfolgt eine Arretierung und Einspannung der Kamera gleichzeitig. Durch eine Vorspannungseinrichtung wird beim Aufsetzen der Kamera eine mechanische Vorspannung hervorgerufen, so daß die Kamera durch die mechanische Vorspannung zwischen der Kameraplatte und der Kamera fest auf der Kameraplatte eingespannt ist. Um diese Spannung zu erzeugen, ist keine manuelle Betätigung eines Hebels mehr erforderlich. Beim Aufsetzen der Kamera wird durch die Drehbewegung, auf die die Kamera beim Einsetzen in ein Halteelement der Kameraplatte festgelegt ist, über den Hebel "Kamera" automatisch eine Vorspannung erzeugt. Anstelle von zwei aufeinanderfolgenden Schritten ist nur noch einer erforderlich. Denn die Vorspannung wird dadurch erzeugt, daß die Kamera nur gegen den Druck der Vorspannungseinrichtung aufsetzbar ist. Erfindungsgemäß wird so auf einfache Weise eine automatische Verriegelung und Einspannung einer Kamera auf einer Kameraplatte bewirkt. So kann auch eine Person ohne umständliches Hantieren die Kamera schnell und sicher auf die erfindungsgemäße Kameraplatte aufsetzen.

Die Kamera muß zudem nicht mehr als Ganzes positionsgenau auf die Kameraplatte aufgesetzt werden. Zunächst wird nur ein Vorsprung der Kamera am vorderen Ende der Kameraplatte eingehakt. Dieses Einsetzen ist auch unter ungünstigen Bedingungen sehr viel einfacher zu bewerkstelligen, als ein positionsgenaues Aufsetzen der ganzen Kamera auf die Kameraplatte.

Als Halteelement besitzt die Kameraplatte vorzugsweise einen zylindrisch geformten Bolzen. Der Bolzen stellt die Rotationsachse für die Kamera dar. Auf diese Weise wird von der Form des Bolzens eine Rotationsbewegung der Kamera unterstützt.

Besonders einfach ist ein Aufsetzen der Kamera, wenn diese zwei seitliche Vorsprünge besitzt, die jeweils mit entsprechend angeordneten Bolzen als Rotationsachse zusammenwirken. Die Bolzen sind dazu seitlich in einer Ausnehmung der Kameraplatte angeordnet. Auf diese Weise wird die Kamera an diesem Ende ohne eine umständliche mechanische "Einfädelung" festgehalten.

An dem andere Ende besitzt die Kameraplatte eine Verriegelungseinrichtung, die einen Schieber, ein Verriegelungselement, eine Feder und eine Sicherungseinrichtung umfaßt. Das Verriegelungselement ist fest mit dem Schieber verbunden, so daß zum Entriegeln das Verriegelungselement über den Schieber bewegt werden kann. Der Schieber und das Verriegelungselement, die beweglich auf der Kameraplatte angeordnet sind, stehen unter einer Vorspannung, die beide in den "Verriegelungs"-Zustand zieht. Durch einen Freigabemechanismus wird der Verriegelungsmechanismus bis zur Freigabe im "nicht Verriegelt"-Zustand gehalten. Im "Verriegelt"-Zustand gibt der Schieber eine Sicherungseinrichtung frei, die automatisch eine Entriegelung der Kamera verhindert. Auf diese Weise ist auch zum Verriegeln der Kamera auf der Kameraplatte kein zusätzlicher Handgriff erforderlich.

Der Freigabemechanismus für die Verriegelungseinrichtung wird durch Stifte ausgelöst, die auf der Oberseite der Kameraplatte im Bereich der Verriegelungseinrichtung vorgesehen sind. Im "nicht Verriegelt"-Zustand ragen die beweglich angeordneten Stifte aufgrund ihrer Vorspannung aus der Kameraplatte heraus. Beim Aufsetzen einer Kamera werden diese heruntergedrückt und geben dabei den Verriegelungsmechanismus frei, der die Kamera in diesem Bereich arretiert. Auf diese Weise ist eine vollautomatische Verriegelung der Kamera möglich.

Zum Einspannen der Kamera ist eine Einrichtung vorgesehen, die die Kamera so unter Vorspannung setzt, daß diese sich in der Befestigungsvorrichtung - auch bei leichtem Spiel - nicht bewegen kann. Dazu ist im Bereich des Bolzens eine Platte vorgesehen, auf die von unten eine Feder wirkt. Diese Platte ist auf der Seite des Rotationspunktes der Kameraplatte angeordnet. Nach dem Einhaken der Nase in das Halteelement wird die Kamera über eine Drehbewegung auch am anderen, hinteren Ende der Kameraplatte aufgesetzt. Diese Drehbewegung ist nur gegen den Widerstand der unter Vorspannung stehenden Platte möglich. Die Nase der Kamera oder des an der Kamera befestigbaren Verbindungselementes ist so geformt, daß die Kamera beim Aufsetzen nur unter Vorspannung einsetzbar ist. Mit Hilfe einer Metallplatte und darunter angeordneten Federelementen kann auf einfache Weise die Vorspannung erzeugt werden. Die Vorspannung ist vorzugsweise so groß, daß die Kamera bei der Drehbewegung zum Aufsetzen des hinteren Endes durch ihr Eigengewicht gerade die Vorspannung überwinden kann. So läßt sich die Kamera sehr leicht auf dem anderen Ende aufsetzen und verriegeln. Dazu liegt die Vorspannung in der Regel etwa im Bereich des Zwei- bis Dreifachen des Kameragewichtes.

Gemäß einem weiteren Aspekt der Erfindung ist ein Verbindungselement vorgesehen. Dieses Verbindungselement läßt sich durch eine Befestigungseinrichtung an ihrer Oberseite auf der Unterseite üblicher tragbarer Kameras befestigen. An der Unterseite des Verbindungselementes ist zumindest eine nach unten ragende Nase vorgesehen. Diese Nase kann in den Bolzen der Kameraplatte eingehakt werden. Vorzugsweise ragt ein Vorsprung der Nase in Richtung der Vorderseite der Kamera. Die Kamera wird dann zuerst mit ihrem vorderen unteren Ende in das Halteelement der Kameraplatte eingehakt. Anschließend wird die Kamera nur noch an ihrem hinteren Ende auf die Kameraplatte abgesenkt.

Das Verbindungselement kann so ausgebildet werden, daß es zwei jeweils seitlich angeordnete Nasen aufweist. Dazu besteht das Verbindungselement aus im wesentlichen drei Komponenten, und zwar einer Deckplatte mit der Befestigungseinrichtung für eine Kamera an der Oberseite und zwei Seitenelementen. Diese Seitenelemente weisen an ihrem vorderen unteren Ende Vorsprünge auf und bewirken außerdem ein "Abrollen" der Kamera beim Aufsetzen auf der Kameraplatte, bei dem die Vorspannung aufgebaut wird. Durch zwei seitliche Elemente an dem Verbindungselement mit den Vorsprüngen an ihrem vorderen unteren Ende wird die Kamera nach dem Einhaken auf die Drehbewegung zum Aufsetzen des anderen Endes der Kamera festgelegt. Dadurch ist ein einfaches "Einfädeln" und Aufsetzen der Kamera auf die Kameraplatte möglich.

Ein weiterer Aspekt der Erfindung betrifft ein Schnittstellensystem, das aus einer erfindungsgemäßen Kameraplatte und einem erfindungsgemäßen Verbindungselement besteht. Das Zusammenspiel der beiden Komponenten ermöglicht ein schnelles Aufsetzen und Einspannen der Kamera, wobei die Kameraplatte mit Hilfe des Verbindungselementes auch für solche Kameras verwendet werden kann, die ursprünglich nicht für die erfindungsgemäße Kameraplatte vorgesehen wurden.

Gemäß einem weiteren Aspekt der Erfindung wird ein schnellerer Wechsel zwischen einem mobilen und eine ortsfesten Einsatz einer tragbaren Kamera dadurch ermöglicht, daß zusätzlich zu der mechanischen Schnittstelle, die einen schnellen mechanischen Wechsel möglich macht, auch eine elektrische Schnittstelle vorgesehen ist. Eine elektrische Schnittstelle, die mit der mechanischen Schnittstelle verkoppelt ist, ermöglicht, daß gleichzeitig mit der mechanischen Verbindung auch eine elektrische Verbindung hergestellt wird und umgekehrt auch wieder gelöst wird.

Dazu werden alle Kameraanschlüsse, oder zumindest die wichtigsten, wie beispielsweise die Stromversorgung und das Videosignal, über elektrische Kontakte geführt, die vorzugsweise auf der Kamera-Unterseite und der Oberseite der Kameraplatte vorgesehen sind. Mit dem Aufsetzen der Kamera auf die Kameraplatte werden die jeweiligen Kontaktelemente automatisch kontaktiert und ermöglichen so eine Übertragung elektrischer Signale zwischen der Kamera und der Kameralatte. Dazu sind die elektrischen Kontakte auf der Unterseite der Kamera jeweils mit den entsprechenden Kamera-Anschlüssen inoder extern verbunden und die Kontaktelemente auf der Oberseite der Kameraplatte mit den entsprechenden elektrischen Anschlußleitungen der externen Geräte. Die Stekker/Buchsen der jeweiligen Anschlüsse können direkt auf der Oberfläche der Seiten der Kameraplatte oder innerhalb der Kameraplatte angeordnet werden. Bei einer Anordnung innerhalb der Kameraplatte schließen die Stecker/Buchsen vorteilhafterweise bündig mit der Seitenoberfläche der Kameraplatte ab. Die Anschlüsse können auch über Kabel aus der Kameraplatte an der Seite herausgeführt werden.

Auf diese Weise läßt sich eine elektrische Kontaktierung gleichzeitig mit der mechanischen Verbindung herstellen, so daß ein Wechsel vom mobilen Einsatz zu einem ortsfesten Einsatz auf einem Kameraschwenkkopf oder einem Stativ deutlich schneller als bisher möglich ist.

Zu diesem Zweck werden Kameraplatten auf ihrer Oberseite mit entsprechenden Kontaktelementen ausgestattet. Gleichzeitig werden die Kameras mit entsprechend angeordneten Kontaktelementen auf ihrer Unterseite versehen.

Bevorzugt werden die Kontaktelemente der Kamera auf der Unterseite des Verbindungselementes angebracht, so daß sie beim Aufsetzen mit den entsprechenden Kontaktelementen der Kameraplatte in Verbindung gebracht werden. Um eine elektrische Verbindung mit den entsprechenden Kameraanschlüssen zu ermöglichen, sind deshalb an den Außenseiten des Verbindungselementes elektrische Anschlüsse vorgesehen, die jeweils mit den entsprechenden Kameraanschlüssen verbunden werden können. Die elektrischen Anschlüsse des Verbindungselementes sind entweder als Buchsen/Stecker ausgebildet, die direkt auf der Seitenoberfläche des Verbindungselementes angeordnet sind, oder sie werden über Kabel aus der Seitenoberfläche des Verbindungselementes herausgeführt. Vorteilhafterweise weisen die Kabel je nach Belegung des Kabels jeweils den entsprechenden Stecker (Buchse) und die erforderliche Länge auf, um direkt mit dem entsprechenden Anschluß an der Kamera oder dem Objektiv verbunden werden zu können.

Auf diese Weise wird eine Schnittstellenvorrichtung geschaffen, bei der einerseits die Kamera mit einem Verbindungselement ausgestattet ist, das Kontaktelemente auf seiner Unterseite aufweist, und andererseits eine Kameraplatte mit entsprechend angeordneten Kontaktelementen auf der Oberseite versehen ist. Eine solche Schnittstellenvorrichtung verbessert durch diese Kombination die bisher bekannten allein mechanischen Schnittstellenvorrichtungen.

Portable Broadcast-Kameras besitzen an ihrer Unterseite eine Aussparung, um besser auf der Schulter einer Bedienperson plaziert werden zu können. Beim Aufsetzen auf eine Kameraplatte befindet sich daher bloß der vordere und der hintere Abschnitt der Unterseite einer Kamera im Kontakt mit der Kameraplatte. Elektrische Kontaktelemente können im Bereich des vorderen und hinteren Abschnitts vorgesehen werden. Vorteilhafterweise werden die Kontakte im vorderen Abschnitt vorgesehen. Auf diese Weise ist es möglich, im hinteren Bereich mechanische Elemente für eine Verriegelung der Kamera vorzusehen.

Im allgemeinen besitzt ein Kameraschwenkkopf einen Schwenkarm zur Bewegung der Kamera. Der Griff dieses Schwenkarms ist mit einer Einstelleinrichtung ausgestattet, damit die Zoomeinstellung der Kamera kontrolliert werden kann. Neben der Stromversorgung und dem Videosignal, das von der Kamera erzeugt wird, gehört deshalb das Zoomsteuersignal zu den wesentlichen elektrischen Signalen, für die elektrische Kontaktelemente an der Kamera-Unterseite bzw. der Unterseite des Verbindungselementes und der Oberseite der Kameraplatte vorgesehen werden. Damit läßt sich bei minimalem Aufwand für die Schnittstelle eine größtmögliche Zeiteinsparung erreichen, da nur in Ausnahmefällen weitere Leitungen mit der Kamera beim stationären Einsatz verbunden werden.

Vorteilhafterweise werden über zusätzliche elektrische Kontaktelemente weitere Einstellungssignale, wie die Schärfeeinstellung und die Blendeneinstellung der Kamera und ein von der Kamera erzeugtes Tonsignal übertragen.

Broadcast-Kameras sind für den mobilen Einsatz um so besser geeignet, je geringer ihr Gewicht ist und je kleiner ihre Abmessungen sind. Es ist deshalb wünschenswert, den Umfang der in der Kamera vorgesehenen Komponenten nur auf die wirklich notwendigen zu beschränken. Werden bestimmte Komponenten jedoch ausgelagert, müssen diese jeweils als externe Zusatzgeräte bereitgestellt werden. Das führt nicht nur zu einer erhöhten Unbequemlichkeit bei einem stationären Betrieb, sondern auch zu einem deutlich höheren Zeitaufwand für die Verkabelung. Der Aufwand an Zusatzgeräten sollte deshalb auf ein Minimum beschränkt bleiben.

Gemäß einem weiteren Aspekt der Erfindung werden deshalb Zusatzeinrichtungen innerhalb der Kameraplatte angeordnet. Dies hat den besonderen Vorteil, daß diese zusätzlichen Komponenten gleichzeitig mit der Kameraplatte elektrisch angeschlossen sind. Eine gesonderte Verkabelung ist nicht mehr erforderlich. Die Einsatzmöglichkeiten einer tragbaren Kamera können deshalb ohne zusätzlichen Aufwand durch diese Maßnahme weiter verbessert werden.

Vorteilhafterweise wird deshalb eine Verteilereinrichtung in der Kameraplatte vorgesehen. Diese Verteilereinrichtung erlaubt, ein Videosignal gleichzeitig auf mehrere externe Anschlüsse zu leiten.

Insbesondere können gemäß der Erfindung Signalverarbeitungseinrichtungen in der Kameraplatte angeordnet werden. Damit lassen sich beispielsweise Videosignale, die von der Kamera erzeugt werden, in ein anderes Format umwandeln. Angesichts der Vielzahl möglicher Signalformate lassen sich so auf einfache Weise Hardware-Komponenten, die für unterschiedliche Videoformate vorgesehen sind (beispielsweise unterschiedlicher Hersteller), miteinander kombinieren.

Gemäß einem weiteren Aspekt der Erfindung können in der Kameraplatte digitale Aufzeichnungseinrichtungen angeordnet werden. Damit lassen sich beispielsweise Videosignale der Kamera auf Festplatten aufzeichnen, wie sie in handelsüblichen PCs verwendet werden. Während solche Festplatten in tragbaren Kameras wegen der auftretenden Erschütterungen im allgemeinen nicht untergebracht werden können, läßt sich mit einer solchen Anordnung die Aufzeichnungskapazität einer Broadcast-Kamera deutlich erweitern. Zudem wird die elektronische Nachverarbeitung der aufgezeichneten Videosignale deutlich erleichtert, da ein PC zur Nachbearbeitung der Bildsignale direkt auf die auf der Festplatte gespeicherten Signale zugreifen kann. Ein zeitraubendes Umkopieren bzw. Überspielen auf eine Festplatte entfällt damit. Außerdem wird dadurch die elektronische Berichterstattung erleichtert. Denn Bildsignale, die auf einer Festplatte gespeichert sind, lassen sich sehr viel schneller und einfacher über ein Datennetz, beispielsweise das Internet, zu einer anderen Stelle übertragen. Vorteilhafterweise ist die Kameraplatte dabei so ausgestaltet, daß das digitale Aufzeichnungsmedium in der Kameraplatte sehr leicht auswechselbar ist. Für die digitale Aufzeichnung sind insbesondere solche Festplatten geeignet, wie sie für notebookartige PCs hergestellt werden. Es lassen sich auch andere digitale Aufzeichnungsmedien kleiner Bauart verwenden, wie beispielsweise Flashdisks, die zudem den Vorteil haben, daß sie mechanisch äußerst robust sind. Diese Aufzeichnungsvorrichtungen können auch allein für Steuersignale oder Parameter von/für die Kamera verwendet werden. In dem Fall können problemlos Aufzeichnungsvorrichtungen verwendet werden, die kleiner und auch robuster sind.

Gemäß einem weiteren Aspekt wird in der Kameraplatte eine Empfangseinrichtung angeordnet, mit der eine Fernsteuerung, insbesondere eine drahtlose Fernsteuerung, der Kamera möglich ist. Eine Fernsteuerung ist immer dann vorteilhaft, wenn aufgrund äußerer Umstände, beispielsweise wegen Platzmangels, wegen spezieller Umweltbedingungen oder bei einer Bedienung mehrerer Kameras von einer zentralen Stelle aus, keine Bedienperson direkt an der Kamera einsetzbar ist. In einer solchen Situation ist in der Regel auch kein Platz für ein zusätzliches Gerät. Wenn eine solche Empfangseinrichtung innerhalb der Kameraplatte untergebracht werden kann, wird die Möglichkeit zur Fernsteuerung von Broadcast-Kameras deutlich verbessert.

Gemäß einem weiteren Aspekt ist in der Kameraplatte eine Sendeeinrichtung zur drahtlosen Übertragung des von der Kamera aufgenommenen Videosignals enthalten.

Vorteilhafterweise ist die Kameraplatte so ausgestaltet, daß sie, je nach Anwendung, mit einer beliebigen elektrischen Vorrichtung ausgestattet werden kann. Dazu ist innerhalb der Kameraplatte eine Aussparung vorgesehen, die jeweils Module gleicher Größe aufnehmen kann. Für unterschiedliche Einsatzzwecke werden dazu unterschiedliche Module mit jeweils verschiedenen Signalverarbeitungsvorrichtungen bereitgestellt. Beispielsweise die oben angesprochenen elektronischen Einrichtungen, die erfindungsgemäß in der Kameraplatte angeordnet werden können. Eine solche Kameraplatte ist dann besonders flexibel einsatzfähig.

Gemäß einem weiteren Aspekt der Erfindung sind die sich jeweils gegenüberliegenden elektrischen Kontaktelemente der Kamera bzw. des Verbindungselementes und der Kameraplatte unterschiedlich ausgebildet. Während die Kontaktelemente der einen Seite beispielsweise als flache Kontakte ausgebildet sein können, sind die gegenüberliegenden elektrischen Kontaktelemente im wesentlichen in einer Richtung senkrecht zur Oberfläche beweglich, so daß diese Kontaktelemente eine mechanische Vorspannung aufweisen und daher aus der Oberfläche herausragen. Auf diese Weise wird eine einfache und besonders robuste Kontaktierung der gegenüberliegenden Kontaktelemente hergestellt.

Vorteilhafterweise enthält die Kameraplatte oder die Kamera eine Einrichtung, die nach dem Aufsetzen der Kamera auf die Kameraplatte automatisch überprüft, ob eine ordnungsgemäße Kontaktierung der Kontaktelemente hergestellt ist. Damit lassen sich Kontaktierungsfehler sofort erkennen, und es wird vermieden, daß aufgrund einer mangelhaften Kontaktierung unbemerkt von der Bedienperson eine unzureichende oder keine Aufzeichnung durchgeführt wird.

Insbesondere ist dazu auf der Kameraplatte oder auf der Kamera eine Anzeigeeinrichtung, vorteilhafterweise eine optische Anzeigeeinrichtung, vorgesehen, die ein positives und/oder negatives Überprüfungsergebnis einer Kontaktierungsüberprüfung anzeigt. So läßt sich gleich nach dem Aufsetzen erkennen, ob die Kamera ordnungsgemäß kontaktiert ist und eine Aufzeichnung sofort vom Stativ aus fortgeführt werden kann.

Weitere vorteilhafte Ausgestaltungen der Erfindung sind Gegenstand von Unteransprüchen.

Ausführungsbeispiele der Erfindung werden anhand der Zeichnungen erläutert. Im einzelnen zeigt:
- Fig. 1: eine Kamera mit einem erfindungsgemäß ausgestalteten Verbindungselement,
- Fig. 2: eine erste Stufe des Aufsetzens der Kamera auf eine erfindungsgemäß ausgestal tete Kameraplatte,
- Fig. 3: eine zweite Stufe des Aufsetzens der Kamera auf die Kameraplatte,
- Fig. 4: die auf die erfindungsgemäß ausgestaltete Kameraplatte aufgesetzte Kamera,
- Fig. 5: eine perspektivische Ansicht einer erfindungsgemäß ausgestalteten Kameraplatte und eines erfindungsgemäß ausgestalteten Verbindungselementes,
- Fig. 6: einen Längsschnitt durch eine erfindungsgemäß ausgestaltete Kameraplatte mit einer aufgesetzten Kamera,
- Fig. 7: eine Aufsicht auf eine erfindungsgemäß ausgestaltete Kameraplatte,
- Fig. 8: eine Aufsicht auf einen vorderen Abschnitt einer erfindungsgemäßen Kameraplatte,
- Fig. 9: eine Schnittansicht eines vorderen Abschnitts einer erfindungsgemäßen Kameraplatte und einer Kamera mit einem erfindungsgemäßen Verbindungselement beim Aufsetzen auf die Kameraplatte,
- Fig. 10: den in Fig. 9 gezeigten Ausschnitt, wobei jedoch die Kamera vollständig auf die Kameraplatte aufgesetzt ist,
- Fig. 11: einen Längsschnitt durch eine weitere Ausführungsform einer erfindungsgemäß ausgestalteten Kameraplatte mit einem Verbindungselement,
- Fig. 12: eine Aufsicht auf die Kameraplatte der Fig. 11,
- Fig. 13: ein Längsschnitt durch eine weitere Ausführungsform einer erfindungsgemäß ausgestalteten Kameraplatte mit einer aufgesetzten Kamera,
- Fig. 14: einen weiteren Längsschnitt durch die erfindungsgemäß ausgestaltete Kame raplatte der Fig. 13, und
- Fig. 15: die einzelnen Stufen des Aufsetzens einer Kamera mit einem erfindungsgemäß ausgebildeten Verbindungselement auf eine erfindungsgemäß ausgebildete Ka meraplatte.

Fig. 1 zeigt eine Seitenansicht einer tragbaren Kamera 2. Die Kamera 2 besitzt an ihrer Vorderseite ein Objektiv und an ihrer Unterseite eine Schulterstütze 4. Die Schulterstütze besitzt im mittleren Bereich zwischen dem vorderen und hinteren Ende des Kameragehäuses eine Aussparung, um die Kameras bei einem mobilen Einsatz besser auf der Schulter halten zu können. Beim Aufsetzen dieser Kamera auf eine Kameraplatte werden nur der vordere und hintere Abschnitt, die vor und hinter der Aussparung liegen, mechanisch an der Kameraplatte befestigt. An dem vorderen Abschnitt ist auf der Unterseite der Kamera ein erfindungsgemäß ausgestaltetes Verbindungselement 5 fest mit der Kamera 2 verbunden. Dieses Verbindungselement ermöglicht, daß die Kamera sehr viel schneller auf der Kameraplatte 1 mechanisch befestigt werden kann.

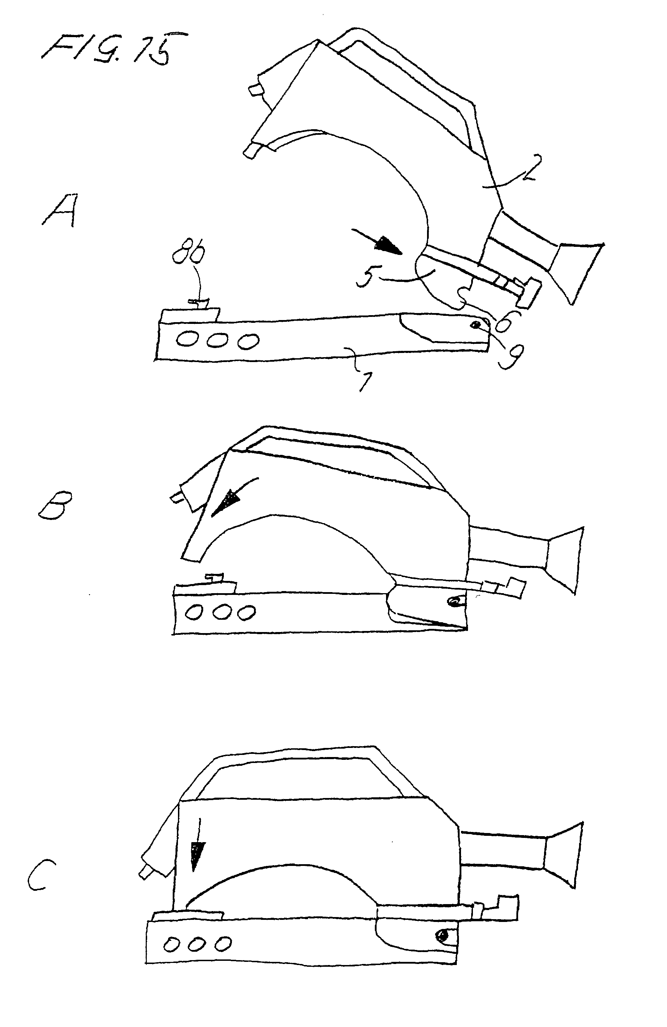

Eine Prinzipskizze, in der das Aufsetzen der Kamera 2 auf die Kameraplatte 1 veranschaulicht ist, ist in Fig. 15 dargestellt. Dazu wird die Kamera 2, an der ein erfindungsgemäß ausgestaltetes Verbindungselement 5 befestigt ist, wie in Abbildung A und B von Fig. 15 gezeigt, zunächst mit einem Vorsprung 6 des Verbindungselementes 5 in entsprechende Bolzen 9 der Kameraplatte 1 eingehakt. Anschließend wird das hintere Ende der Kamera 2 auf die Kameraplatte 1 aufgesetzt, wie in Abbildung C gezeigt. Dazu wird die Kamera in einer Drehbewegung um den Rotationspunkt des Halteelementes 9 gedreht. Durch die Drehbewegung wird zwischen der Unterseite des Verbindungselementes 5 und der Oberseite der an dieser Stelle entsprechend gestalteten Kameraplatte 1 eine mechanische Vorspannung zwischen Kamera und Kameraplatte erzeugt. Das hintere Ende wird nach dem Aufsetzen der Kamera auf der Kameraplatte mechanisch fest mit dieser verbunden, so daß die Kamera auf der Kameraplatte arretiert ist.

Der Aufsatzvorgang ist in den Fig. 2 bis 4 im einzelnen dargestellt. In Fig. 2 ist ein Zustand dargestellt, bei dem die Kamera 2 mit den Vorsprüngen 6 des Verbindungselementes 5 gerade in die Kameraplatte eingesetzt wird. Dabei wird die Kamera leicht nach vorn geneigt, so daß die Vorsprünge 6 des Verbindungselementes 5 leichter unter die seitlich herausstehenden Bolzen 9 geschoben werden können. Am hinteren Ende der Kameraplatte 1 ist die Verriegelungsvorrichtung 8 zu erkennen. Dabei befindet sich auf der Unterseite der vertieft ausgebildeten vorderen seitlichen Abschnitte, den Ausnehmungen der Kameraplatte 1 eine Einrichtung 3 zur Erzeugung einer Vorspannung.

In Fig. 3 sind die Vorsprünge 6 des Verbindungselementes 5 vollständig unter die Bolzen oder Zapfen 9 der Kameraplatte geschoben und die Kamera wird in einer Drehbewegung auf den hinteren Teil der Kameraplatte 1 zubewegt.

In Fig. 4 ist der Zustand dargestellt, bei dem die Kamera 2 auf der Kameraplatte 1 aufgesetzt ist. Beim Aufsetzen der Kamera wird das hintere Ende der Kamera automatisch mechanisch fest mit der Kameraplatte verbunden. Zu diesem Zweck wird ein auf der Kameraplatte befindlicher Schieber 8a, der mit einem Verriegelungselement 8b starr verbunden ist, so verschoben, daß das hintere Ende der Kamera fest mit der Kameraplatte verbunden ist. Dazu greift das Verriegelungselement 8b in einen üblicherweise an tragbaren Kameras vorgesehenen Haltebügel 8e mit einer Öffnung für einen vorspringenden Teil des Verriegelungselementes 8b ein. Dieser Verschiebevorgang läuft automatisch ab, und zwar wird beim Aufsetzen des hinteren Teils der Kamera auf Stifte 11a eines Freigabemechanismusses eine automatische Verriegelung der Kamera bewirkt. Damit sich die Verriegelung nicht versehentlich von selbst löst, ist zusätzlich eine Sicherungseinrichtung 8c in der Kameraplatte vorgesehen. Diese ist, solange sich der Schieber 8a in der nicht verriegelten Stellung befindet, von dem Schieber 8a verdeckt. Da die Sicherungseinrichtung 8c beweglich in der Kamerplatte angeordnet ist und unter einer mechanischen Vorspannung steht, die in Richtung der Oberseite der Kameraplatte wirkt, ragt sie aus der Kameraplatte nach oben heraus, sobald sich der Schieber 8a in der "Verriegelt"-Stellung befindet und die Sicherungseinrichtung 8c freigibt. Der Schieber 8a kann damit nicht versehentlich in die "nicht Verriegelt"-Stellung verschoben werden. Die Kamera ist auf diese Weise sicher und fest mit der Kameraplatte verbunden.

In den Fig. 2 bis 4 sind jeweils drei elektrische Anschlüsse 13 zu erkennen, die etwa in der Mitte der dem Betrachter zugewandten seitlichen Außenfläche der Kameraplatte 1 angeordnet sind. An diese Anschlüsse sind die entsprechenden Signalleitungen anschließbar, beispielsweise eine Stromzuführung, eine Videosignalleitung, Leitungen für Einstellsignale, wie z.B. Zoom- oder Blendeneinstellung oder ein Tonsignal. Welche Signale im Einzelfall über diese Leitungen den elektrischen Kontakten zugeführt werden, läßt sich beliebig variieren; ebenso die Anzahl der elektrischen Anschlüsse und der entsprechenden Kontaktelemente. Auf diese Weise kann die erfindungsgemäß ausgestaltete Kameraplatte bzw. Schnittstellenvorrichtung an die jeweiligen Bedürfnisse angepaßt werden.

Fig. 5 zeigt eine perspektivische Ansicht des erfindungsgemäßen Schnittstellensystems aus Kameraplatte 1 und Verbindungselement 5. Das Verbindungselement 5 kann an seiner Oberseite mechanisch fest mit der Unterseite eines vorderen Abschnittes einer Kamera verbunden werden. Dazu besitzt das Verbindungselement 5 eine Befestigungsvorrichtung 12. Diese ist so ausgestaltet, daß sie mit der an einer Kamera vorgesehenen Befestigungsvorrichtung verbindbar ist. Wie aus dem vorderen Bereich der komplementär zu diesem Verbindungselement 5 ausgebildeten Kameraplatte 1 zu entnehmen ist, besteht das Verbindungselement 5 im wesentlichen aus drei Komponenten: einer Deckplatte, die parallel zur Unterseite der Kamera angeordnet ist und auf ihrer Oberseite die Befestigungsvorrichtung 12 aufweist, und aus zwei senkrecht dazu an den beiden Seiten angeordneten Nasen, die in Richtung der Kameraplatte 1 ragen. Bei dieser Ausführungsform werden die Vorsprünge 6 durch Aussparungen an der Vorderseite erzeugt, die beim Aufsetzen der Kamera die seitlich vorragenden Bolzen 9 in der Kameraplatte 1 umgreifen. Das Verbindungselement 5 weist unterhalb der Deckplatte (hier nicht sichtbar) Kontaktelemente auf. Diese Kontaktelemente dienen zur Übertragung elektrischer Signale von der Kameraplatte zur Kamera und umgekehrt.

An der dem Betrachter zugewandten Seite sind an dem Verbindungselement 5 drei elektrische Anschlüsse 14 vorgesehen. Innerhalb des Verbindungselementes 5 sind die elektrischen Kontaktelemente mit den elektrischen Anschlüssen 14 verbunden. Die elektrischen Anschlüsse 14 können mit den jeweiligen elektrischen Anschlüssen der Kamera verbunden werden.

Zusätzlich ist in Fig. 5 zu erkennen, daß das Verbindungselement 5 in dieser Ausführungsform zwei nach unten ragende Zapfen 10a aufweist, die in entsprechende Vertiefungen 10b auf der Kameraplatte 1 einrasten, sobald die Kamera vollständig aufgesetzt ist.

Die Kameraplatte 1 weist an ihrem Ende zwei jeweils zur Seite weisende zylindrisch geformte Zapfen oder Bolzen 9 auf, die das Verbindungselement 5 beim Aufsetzen in der Kameraplatte halten. Dazu weist die Kameraplatte zur Aufnahme der seitliche angeordneten Nasen des Verbindungselementes 5 entsprechende seitliche Ausnehmungen auf. Es ist jedoch auch möglich, beispielsweise nur eine Nase und nur eine entsprechende Ausnehmung mit einem Bolzen vorzusehen.

Am hinteren Ende der Kameraplatte 1 ist das Verriegelungselement 8b zu erkennen. Dieses wird zum Verriegeln, d.h. Arretieren der Kamera, automatisch in Richtung der Rückseite der Kameraplatte verschoben. Dabei ist das Verriegelungselement an seiner Oberseite größer ausgebildet. Dadurch wird ein entsprechender Haltebügel 8e am hinteren Ende der Kamera beim Aufsetzen festgehalten. Um eine automatische Verriegelung zu ermöglichen, wird das unter Vorspannung stehende Verriegelungselement 8b beim Eindrücken der Stifte 11 a und 11b des Freigabemechanismusses freigegeben, so daß eine automatische Arretierung der Kamera erfolgt.

Auf der Oberfläche der Kameraplatte 1 im vorderen Bereich sind drei elektrische Kontaktbereiche zu erkennen. Diese Kontaktbereiche weisen jeweils acht elektrische Kontaktelemente 7 auf. Jedes der Kontaktelemente 7 ist beweglich in der Kameraplatte 1 angeordnet und ragt jeweils leicht aus der Kameraplatte heraus. Dazu ist jedes Kontaktelement 7 mit einer mechanischen Vorspannung versehen, die es aus der Kameraplatte herausdrückt. Im Gegensatz dazu sind die entsprechend angeordneten Kontaktelemente des Verbindungselementes 5 als Flachkontakte ausgebildet. Beim Aufsetzen des Verbindungselementes 5 drücken die Flachkontakte auf die gegenüberliegenden elektrischen Kontakte 7. Durch den Andruck wird eine sichere Kontaktierung der jeweils gegenüberliegenden Kontaktelemente hergestellt. Beim Aufsetzen des Verbindungselementes 5 mit den Flachkontaktelementen kommt es beim Hereindrücken der beweglichen Kontaktelemente 7 zu einer leichten Relativverschiebung der gegenüberliegenden Kontaktelemente zueinander, so daß eine ordnungsgemäße Kontaktierung sichergestellt wird. Die Anordnung der Flachkontakte und der beweglichen Kontaktelemente kann ebensogut vertauscht werden.

Die Kontaktelemente 7 der Kameraplatte 1 sind mit an der Außenseite der Kameraplatte angeordneten elektrischen Anschlüssen 13 verbunden. In der in dieser Figur dargestellten Ausführungsform sind drei elektrische Anschlüsse gezeigt, die im hinteren Bereich der seitlichen Außenfläche der Kameraplatte angeordnet sind. Im vorliegenden Fall ist jeweils einer der elektrischen Anschlüsse 13 innerhalb der Kameraplatte 1 mit den elektrischen Kontaktelementen 7 jeweils eines der Kontaktbereiche 15 verbunden.

Bei einem stationären Betrieb wird die Kameraplatte 1 auf einen Kameraschwenkkopf oder ein Stativ aufgesetzt. Dazu wird die Kameraplatte an ihrer Unterseite fest mit der Oberseite des Kameraschwenkkopfes oder des Statives verbunden.

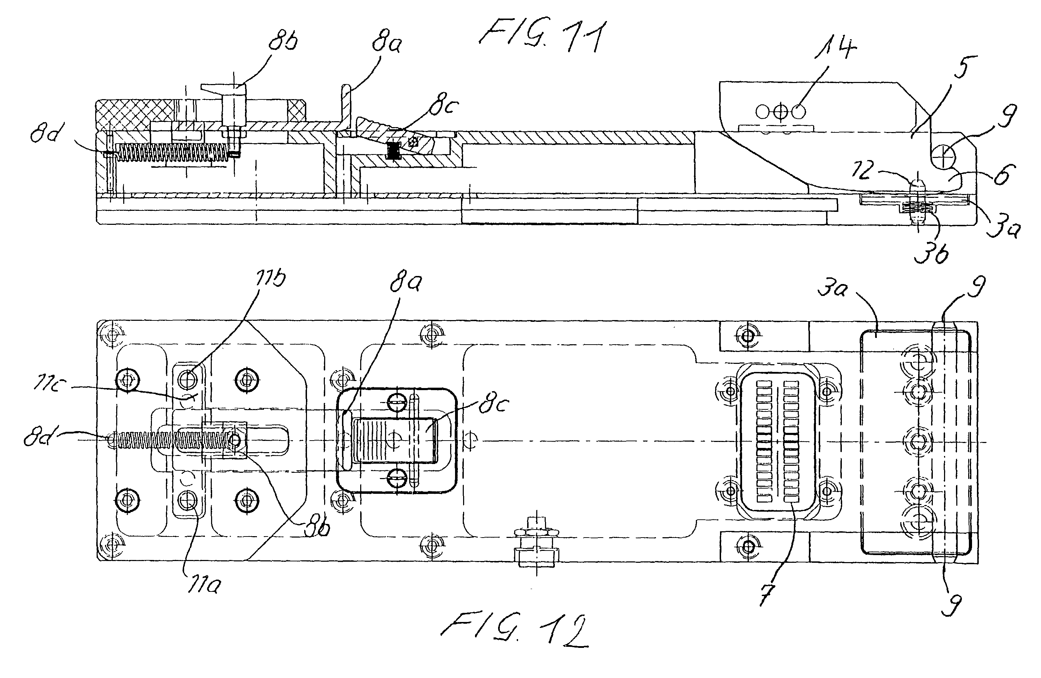

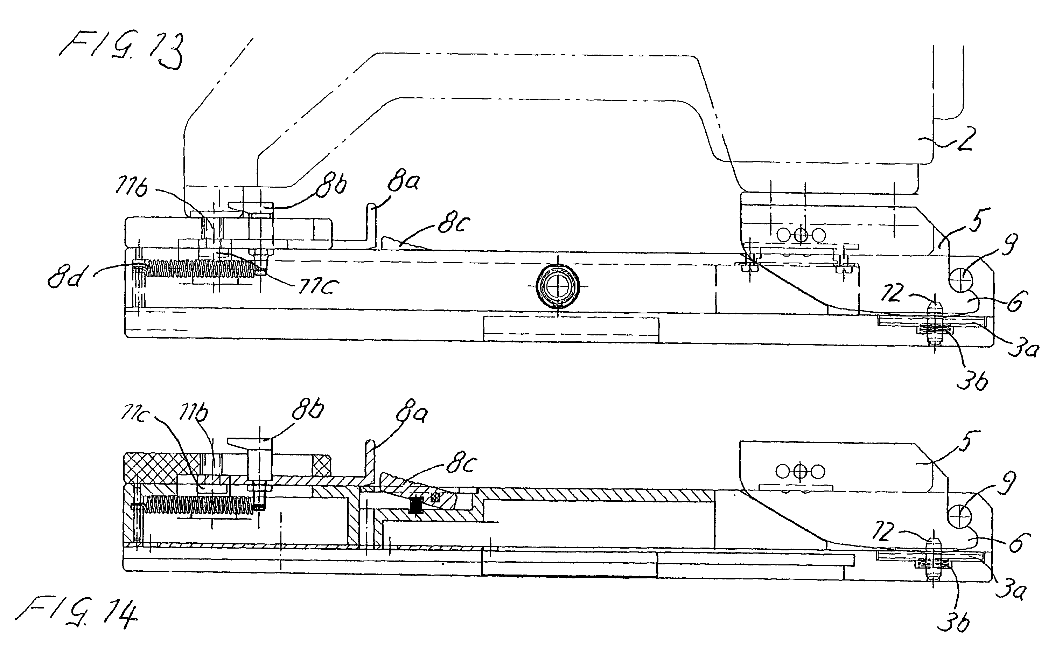

Die Fig. 6, 11, 13 und 14 stellen jeweils einen Längsschnitt durch unterschiedliche Ausführungsformen der Kameraplatte dar. In Fig. 6 ist im Ansatz eine aufgesetzte und eingespannte Kamera 2 gezeigt. Dabei bezeichnen - wie bei allen Figuren - dieselben Bezugszeichen auch dieselben Elemente. In Fig. 6 ist besonders gut der Verriegelungsmechanismus zu erkennen. Der Schieber 8a ist mit dem Verriegelungselement 8b fest verbunden. Beide werden von dem Federelement 8d unter Vorspannung gehalten. Eine automatische Verriegelung wird durch eine Freigabe der Bewegung des Schiebers 8a mit dem Verriegelungselement 8b durch den Freigabemechanismus 11 ausgelöst. In der "nicht Verrriegelt"-Stellung verhindert das Element 11c des Freigabemechanismusses, daß der Schieber 8a mit dem Verriegelungselement 8b sich aufgrund der Vorspannung auf das hintere Ende der Verriegelungsplatte zubewegen kann. Beim Aufsetzen der Kamera auf die Stifte 11a werden diese in die Kameraplatte gedrückt. Dabei wandert auch die Sperre 11c des Freigabemechanismusses nach unten und gibt die Bewegung für den Verriegelungsmechanismus frei.

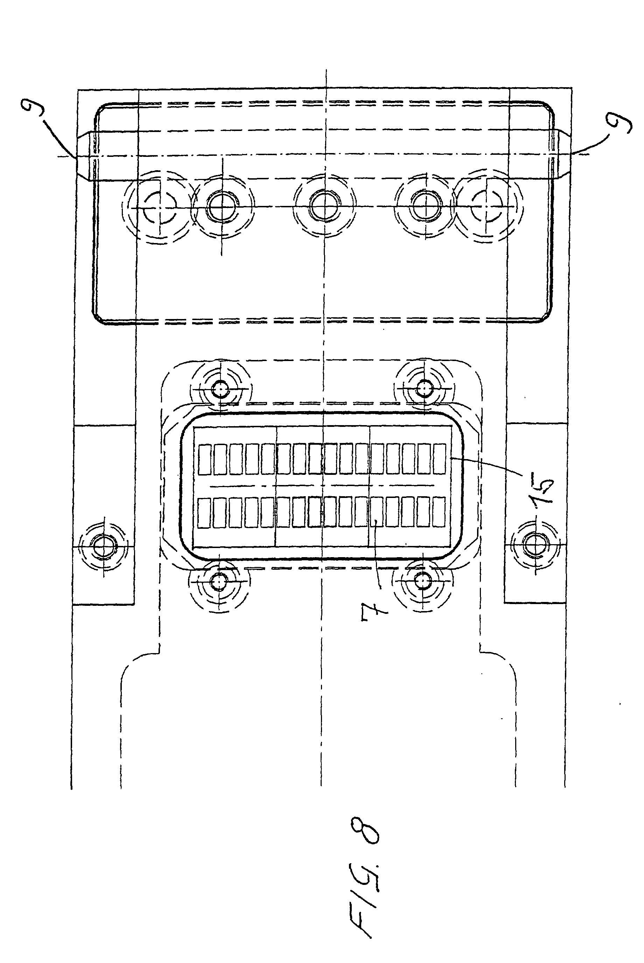

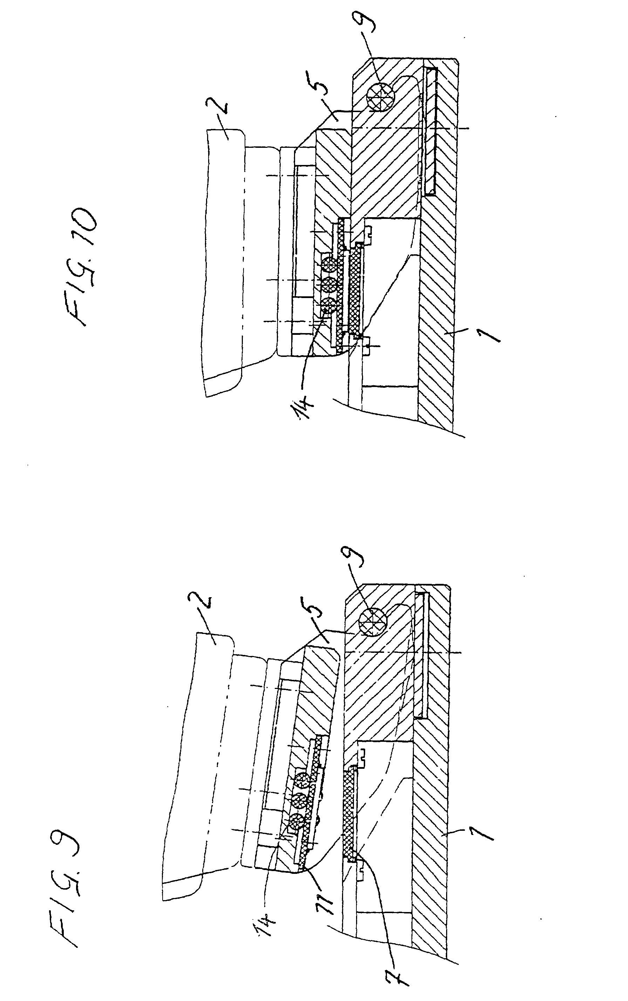

Fig. 7 zeigt eine Aufsicht auf die erfindungsgemäß ausgestaltete Kameraplatte der Fig. 6. Im vorderen Bereich der Kameraplatte 1 sind die zylindrischen Bolzen 9 zu erkennen. Unter dieser Halteeinrichtung 9 ist in Umrissen eine Stahlplatte 3a zu erkennen, die durch Federelemente nach oben gedrückt wird. Eine leicht variierte Ausführungsform der Kameraplatte ist in den Fig.11 bis 14 zu erkennen. Dabei ist insbesondere in den Fig. 11, 12 und 14 dargestellt, wie die mechanische Vorspannung im vorderen Bereich der Kameraplatte erzeugt wird. Unterhalb der Stahlplatte 3a sind Federelemente 3b angeordnet, die für die mechanische Vorspannung sorgen. Der Vorsprung 6 des Verbindungselementes wird bei aufgesetzter Kamera durch die mechanische Vorspannung gegen den/die Bolzen 9 gedrückt. Dadurch wird die Kamera an ihrem vorderen Ende fest zwischen der Vorspannungseinrichtung 3a, 3b und dem Bolzen 9 eingespannt. Weiterhin ist die optional zusätzlich mögliche Einrastung des Verbindungselementes 5 in spezielle Zapfen 12 in der Kameraplatte dargestellt.

Alternativ kann die Vorspannung auch durch entsprechende Federelemente erzeugt werden, die statt in der Kameraplatte in dem Verbindungselement oder einer entsprechend ausgebildeten Kamera angeordnet sind. Diese drücken auf die Kameraplatte. Die von ihnen erzeugte Vorspannung wird von dem Halteelement 9 zurückgehalten.

Das erfindungsgemäß ausgestaltete Schnittstellensystem mit einem Verbindungselement und einer Kameraplatte ist nicht auf die gezeigten Ausführungsformen beschränkt. Es ist sowohl möglich, die Lage des Verbindungselementes 5 und der Halteeinrichtung 9 mit der Verriegelungseinrichtung 8 zu vertauschen. Es ist auch möglich, die Kamera seitlich auf die Kameraplatte aufzusetzen, so daß das Einhaken auf der einen Seite erfolgt und die Verriegelung auf der anderen Seite. Dabei kann der Verriegelungsmechanismus auch seitlich in die Kameraplatte eingreifen.

Ebenfalls im vorderen Bereich ist in Fig. 7 eine andere Ausgestaltung für die Anordnung der Kontaktelemente 7 in einem Kontaktbereich 15 dargestellt. Während in Fig. 5 die Kontaktelemente in drei nebeneinander liegenden Kontaktbereichen 15 angeordnet waren, wobei jeweils vier Kontaktelemente hintereinander in zwei Reihen pro Kontaktbereich 15 vorgesehen waren, ist in Fig. 7 nur ein Kontaktbereich 15 dargestellt. Die Kontaktelemente sind in diesem Fall in zwei Reihen angeordnet, die senkrecht zur Längsrichtung der Kameraplatte verlaufen. Dabei sind, wie auch schon in Fig. 5 die Kontaktelemente nicht quadratisch ausgebildet, sondern sie weisen eine rechteckige Form auf, deren Längsrichtung parallel zur Längsrichtung der Kameraplatte verläuft. Der in Fig. 7 gezeigte Kontaktbereich erstreckt sich fast über die ganze Breite des vorderen Abschnittes der Kameraplatte. In diesem Bereich ist der nutzbare Teil der Kameraplatte etwas schmaler als die Gesamtbreite der Kameraplatte, da die Kameraplatte zur Aufnahme der seitlichen Nasen des Verbindungselementes 5 seitliche Ausnehmungen aufweist. Eine Anordnung der Kontaktelemente 7 wäre auch im hinteren Bereich der Kameraplatte möglich.

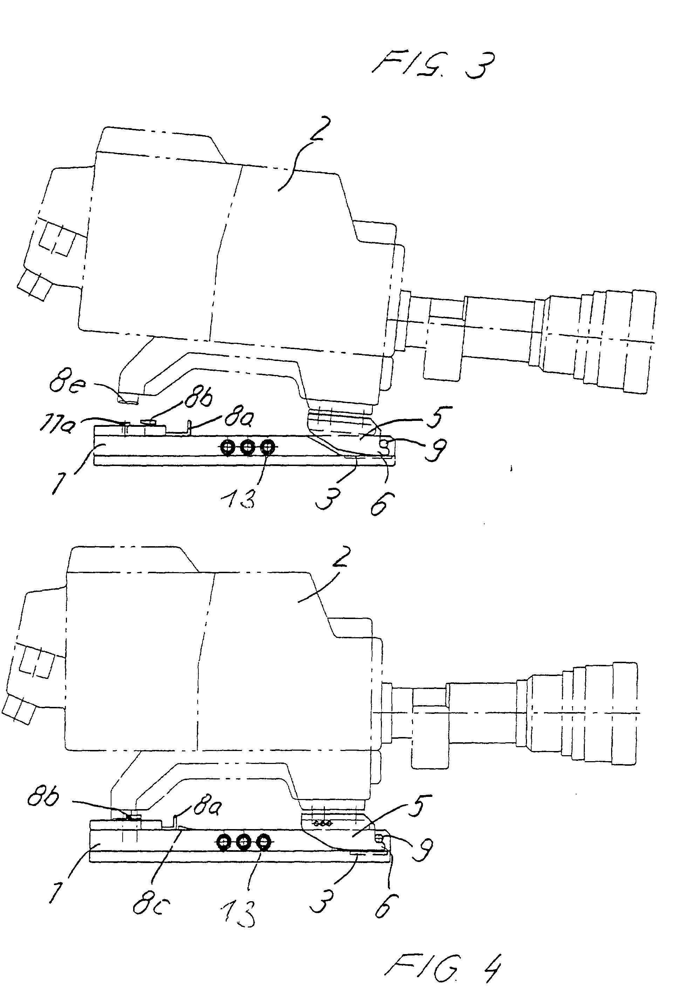

Fig. 8 zeigt eine weitere Ausführungsform einer erfindungsgemäßen Kameraplatte 1. Diese Kameraplatte unterschiedet sich in der Anordnung der Kontaktelemente 15 von der vorhergehenden Ausführungsform. Im Unterschied zur Ausführungsform der Fig. 7 sind die Kontaktelemente 7 in jeweils drei Kontaktbereichen 15 angeordnet.

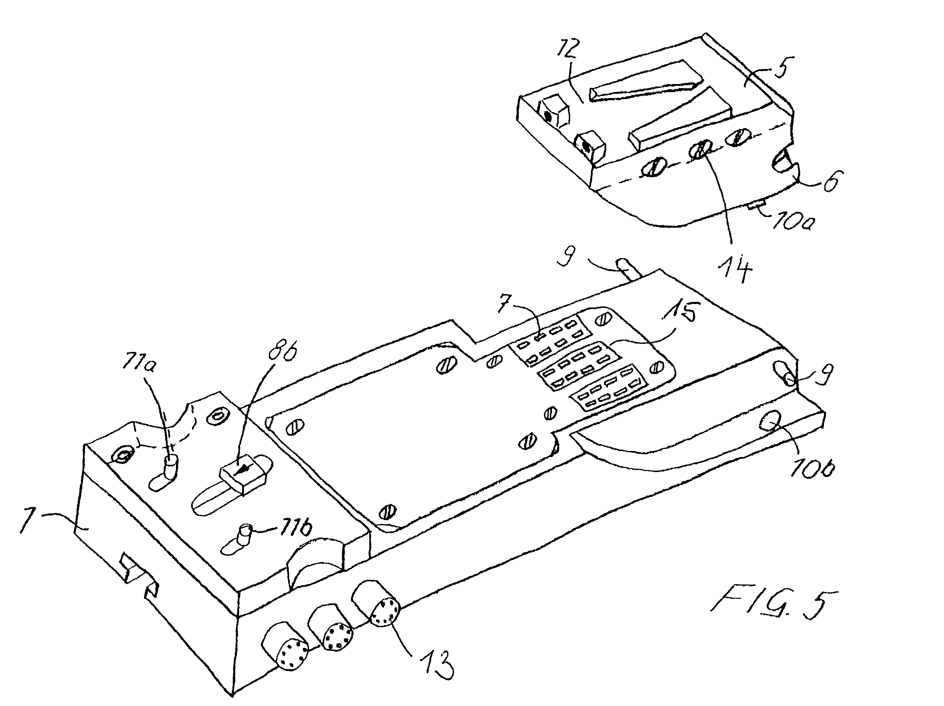

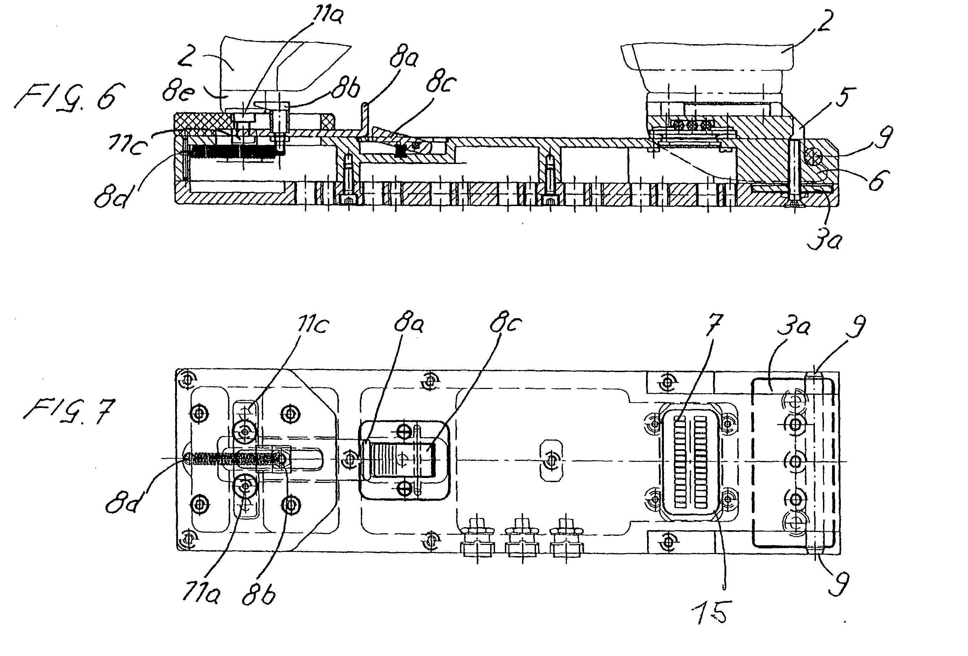

In den Fig. 9 und 10 ist eine weitere Ausführungsform eines erfindungsgemäßen Schnittstellensystems. Dabei zeigen Fig. 9 und 10 einen Schnitt durch den vorderen Abschnitt der Kameraplatte und den vorderen Abschnitt der Kamera mit dem Verbindungselement 5. Während Fig. 9 einen Zustand beim Aufsetzen der Kamera zeigt, ist in Fig. 10 der Zustand einer mechanischen und elektrischen Verbindung des Schnittstellensystems gezeigt. Die elektrischen Elemente der Schnittstellenvorrichtung sind dabei dunkler dargestellt. Auf der Oberseite der Kameraplatte 1 ist der Bereich der elektrischen Kontaktelemente 7 zu erkennen. Auf der Unterseite der Deckplatte des Verbindungselementes 5 sind aufgrund ihrer dunkleren Färbung sowohl der Bereich der Kontaktelemente 11 des Verbindungselementes 5 als auch die elektrischen Anschlüsse 10 zu erkennen. In der vorliegenden Ausführungsform sind die elektrischen Kontaktelemente de Kameraplatte 1 als Flachkontakte ausgebildet und die elektrischen Kontaktelemente 11 des Verbindungselementes 5 ragen aufgrund einer mechanischen Vorspannung aus der Deckplatte des Verbindungselementes 5 heraus.

In Fig. 10 ist ein Zustand dargestellt, bei dem eine elektrische Verbindung hergestellt ist. Dabei sind die Kontaktelemente 11 mit den entsprechend angeordneten, gegenüberliegenden Kontaktelementen 7 ordnungsgemäß verbunden. In diesem Zustand können jeweils beliebige elektrische Signale über die elektrische Schnittstelle von den elektrischen Anschlüssen 15 der Kameraplatte zu den elektrischen Anschlüssen 14 des Verbindungselementes an der Kamera geführt werden. Bei einer entsprechenden Verbindung der elektrischen Anschlüsse 14 mit den jeweiligen Kameraanschlüssen und der Anschlüsse 15 der Kameraplatte 1 mit den jeweiligen externen Geräten kann der Aufsetzvorgang einer Kamera 2 auf eine Kameraplatte 1 deutlich beschleunigt werden. Gleich nach dem Aufsetzen kann der Aufzeichnungsvorgang fortgesetzt werden.

## Patentansprüche

1. Kameraplatte, die mit einer Kamera und einem Stativ verbindbar ist, mit Verbindungsmitteln zum Verbinden von Kamera und Kameraplatte über wenigstens eine Ausnehmung in der Kameraplatte und einen in der Ausnehmung vorgesehenen Vorsprung, der mit einer an der Kamera befestigbaren Nase zusammenwirkt, und zum mechanischen Verriegeln der Kamera mit der Kameraplatte
**dadurch gekennzeichnet, dass**
die Verbindungsmittel erste und zweite Verbindungsmittel (9, 8) umfassen, die jeweils an gegenüberliegenden Enden in Längsrichtung der Kameraplatte angeordnet sind,
der Vorsprung in der wenigstens einen Ausnehmung in den ersten Vebindungsmitteln (9) als quer zur Längsrichtung der Kameraplatte verlaufender Bolzen (9) geformt ist, der mit zwei an der Kamera befestigbaren Nasen (5), die quer zur Längsrichtung der Kameraplatte beabstandet angeordnet sind, so zusammenwirkt, dass beim Aufsetzen der Kamera im wesentlichen nur eine Drehung der Kamera um den Bolzen (9) als Rotationsachse möglich ist, und
die zweiten Verbindungsmittel (8) die Kamera beim Aufsetzen des den Nasen (5) gegenüberliegenden Endes der Kamera mechanisch auf der Kameraplatte verriegeln.

2. Kameraplatte nach Anspruch 1, weiterhin **gekennzeichnet durch**
elektrische Kontaktelemente (7), die auf der Oberseite der Kameraplatte angeordnet sind, zur Übertragung elektrischer Signale über entsprechend angeordnete Kontaktelemente (11) auf der Unterseite einer mit der Kameraplatte mechanisch fest verbindbaren Kamera und
elektrische Anschlüsse (3), die an zumindest einer Außenseite der Kameraplatte angeordnet sind und die innerhalb der Kameraplatte mit den elektrischen Kontaktelementen (7) auf der Kameraplatte verbunden sind.

3. Kameraplatte nach Anspruch 1 oder 2, wobei zwei Ausnehmungen jeweils seitlich am vorderen Ende der Kameraplatte angeordnet sind und ein zylindrischer Bolzen (9) in jede der Ausnehmungen ragt.

4. Kameraplatte nach einem der Ansprüche 1 bis 3, wobei eine Einrichtung (3) zur Erzeugung einer mechanischen Vorspannung in einer Richtung im wesentlichen senkrecht zur Oberfläche der Kameraplatte vorgesehen ist, so dass eine Kamera unter Vorspannung fest auf der Kameraplatte eingespannt werden kann.

5. Kameraplatte nach einem der Ansprüche 1 bis 4, wobei die Verriegelungseinrichtung (8) folgende Elemente umfasst:
ein Verriegelungselement (8b), das in eine entsprechend angeordnete Öffnung (8e) auf einer Kameraunterseite eingreifen kann,
einen Schieber (8a), der mit dem Verriegelungselement (8b) fest verbunden ist und der zusammen mit dem Verriegelungselement (8b) beweglich in der Kameraplatte angeordnet ist,
eine Einrichtung (8d), vorzugsweise ein Federelement, zur Erzeugung einer mechanischen Vorspannung auf den Schieber (8a) und das Verriegelungselement (8b), so dass der Schieber (8a) und das Verriegelungselement (8b) in eine "Verriegelt"-Stellung gezogen werden,
einen Freigabemechanismus (11), der eine Bewegung des unter Vorspannung stehenden Schiebers (8a) und Verriegelungselements (8b) sperren und freigeben kann, und
eine Sicherungseinrichtung (8c), die eine Bewegung des Schiebers (8a) und des Verriegelungselements (8b) in eine "nicht verriegelt"-Stellung verhindert, sobald sich diese in der "Verriegelt"-Stellung befinden.

6. Kameraplatte nach einem der Ansprüche 1 bis 5, wobei die Kameraplatte zumindest einen Stift (11a) aufweist, der im Bereich der Verriegelungseinrichtung (8) angeordnet ist, wobei der Stift (11a) senkrecht zur Oberfläche der Kameraplatte beweglich ist und unter einer Vorspannung steht, so dass der Stift (11a) aus der Oberfläche der Kameraplatte herausragt und beim Aufsetzen einer Kamera hereingedrückt werden kann, wobei der Stift (11a) über einen Freigabemechanismus (11) die unter Vorspannung stehende Verriegelungseinrichtung (8) freigibt, so dass eine aufsetzbare Kamera automatisch verriegelt werden kann.

7. Kameraplatte nach einem der Ansprüche 4 bis 6, wobei die Einrichtung (3) zur Erzeugung einer mechanischen Vorspannung in der Kameraplatte angeordnet ist und folgende Elemente umfasst:
eine Platte (3a) mit der die mechanische Vorspannung auf eine an einer aufsetzbaren Kamera (2) befestigten Nase (5) ausgeübt werden kann, und
ein Federelement (3b), das unterhalb der Platte (3a) angeordnet ist und eine mechanische Vorspannung auf die Platte (3a) ausübt.

8. Kameraplatte nach Anspruch 7, wobei die Vorspannung in etwa dem Zwei- bis Dreifachen eines Kameragewichtes entspricht.

9. Kamerastativ, das ein Stativ und eine an dessen Oberseite befestigte Kameraplatte zum schnellen Aufsetzen einer Kamera umfasst, wobei die Kameraplatte gemäß einem der Ansprüche 1 bis 8 ausgebildet ist.

10. Tragbare Kamera mit Verbindungsmitteln auf ihrer Unterseite zum Befestigen auf einer Kameraplatte über wenigstens eine Ausnehmung in der Kameraplatte und einen in der Ausnehmung vorgesehenen Vorsprung, der mit einer Nase an der Kamera zusammenwirkt, und zum mechanischen Verriegeln der Kamera mit der Kameraplatte
**dadurch gekennzeichnet, dass**
die Verbindungsmittel erste und zweite Verbindungsmittel (5, 8) umfassen, die jeweils an gegenüberliegenden Enden in Längsrichtung der Kamera angeordnet sind,
die ersten Verbindungsmittel zwei Nasen (5) an der Kamera umfassen, die quer zur Längsrichtung der Kamera beabstandet angeordnet sind und so mit einem Vorsprung in der wenigstens einen Ausnehmung in der Kameraplatte, der als quer zur Längsrichtung der Kameraplatte verlaufender Bolzen (9) geformt ist, zusammenwirken, dass beim Aufsetzen der Kamera im wesentlichen nur eine Drehung der Kamera um den Bolzen (9) als Rotationsachse möglich ist, und
die zweiten Verbindungsmittel (8) die Kamera beim Aufsetzen des den Nasen (5) gegenüberliegenden Endes der Kamera mechanisch auf der Kameraplatte verriegeln.

11. Tragbare Kamera nach Anspruch 10, weiterhin **gekennzeichnet durch** elektrische Kontaktelemente (11) auf der Unterseite der Kamera zur Übertragung elektrischer Signale über entsprechend angeordnete elektrische Kontaktelemente (7) auf der Oberseite einer mit der Kamera verbindbaren Kameraplatte.

12. Tragbare Kamera nach Anspruch 11, wobei die Kamera nur im vorderen und hinteren Bereich ihrer Unterseite einen mit der Kameraplatte (1) verbindbaren Abschnitt aufweist und die elektrischen Kontaktelemente (11) sowohl im vorderen Bereich als auch im hinteren Bereich angeordnet sind.

13. Verbindungselement, das an einer Unterseite der Kamera befestigbar ist, zum schnellen Verbinden einer Kamera mit einer Kameraplatte (1), umfassend:
eine Befestigungsvorrichtung (12) auf der Oberseite des Verbindungselementes zur Befestigung an der Unterseite einer Kamera und
Verbindungsmittel auf der Unterseite des Verbindungselementes zum Befestigen auf einer Kameraplatte über wenigstens eine Ausnehmung in der Kameraplatte und einen in der Ausnehmung vorgesehenen Vorsprung, der mit einer Nase an dem Verbindungselement zusammenwirkt,
**dadurch gekennzeichnet, dass**
das Verbindungselement zwei Nasen aufweist,
die mit dem Vorsprung der wenigstens einen Ausnehmung, der als quer zur Längsrichtung der Kameraplatte verlaufender Bolzen (9) geformt ist, so zusammenwirken, dass beim Aufsetzen der Kamera im wesentlichen nur eine Drehung der Kamera um den Bolzen (9) als Rotationsachse möglich ist.

14. Verbindungselement nach Anspruch 13, mit elektrischen Kontaktelementen (11), die auf der Unterseite des Verbindungselementes angeordnet sind, zur Übertragung elektrischer Signale über entsprechend angeordnete Kontaktelemente (7) auf der Oberseite einer mit dem Verbindungselement verbindbaren Kameraplatte (1) und
elektrische Anschlüsse (10), die an zumindest einer Außenseite des Verbindungselementes vorgesehen sind und die innerhalb des Verbindungselementes mit den elektrischen Kontaktelementen (11) verbunden sind.

15. Verbindungselement nach einem der Ansprüche 12 bis 14, **dadurch gekennzeichnet, dass** das Verbindungselement zwei parallel angeordnete Nasen (5) aufweist, die jeweils an einer Seite des Verbindungselementes vorgesehen sind.

16. Schnittstellensystem zum Herstellen einer schnellen mechanischen Verbindung zwischen einer Kamera und einem Stativ umfassend:
ein Verbindungselement, das an einer Unterseite einer Kamera befestigbar ist und eine Nase (5) aufweist, und
eine Kameraplatte (1), nach einem der Ansprüche 1 bis 8.

## Claims

1. Camera plate, which can be connected to a camera and a stand, with connecting means for connecting the camera and the camera plate via at least one recess in the camera plate and a projection, which is provided in the recess and which co-operates with a lug, which can be fastened to the camera, and for mechanically locking the camera to the camera plate,
**characterised in that**
the connecting means comprise first and second connecting means (9, 8), which are in each case disposed at opposite ends in the longitudinal direction of the camera plate,
the projection in the at least one recess in the first connecting means (9) is shaped as a bolt (9) which extends transversely to the longitudinal direction of the camera plate and which co-operates with two lugs (5), which can be fastened to the camera and are disposed at a spacing transversely to the longitudinal direction of the camera plate, such that substantially just one rotation of the camera about the bolt (9) as rotational axis is possible upon attaching the camera, and
the second connecting means (8) mechanically lock the camera to the camera plate upon attaching the end of the camera lying opposite the lugs (5).

2. Camera plate according to Claim 1, also **characterised by**
electrical contact elements (7), which are disposed at the top side of the camera plate, for transmitting electrical signals via correspondingly disposed contact elements (11) at the underside of a camera, which can be firmly connected mechanically to the camera plate, and
electrical connections (3), which are disposed at least at one outer side of the camera plate and are connected inside the camera plate to the electrical contact elements (7) on the camera plate.

3. Camera plate according to Claim 1 or 2, wherein two recesses are in each case disposed laterally at the front end of the camera plate, and a cylindrical bolt (9) projects into each of the recesses.

4. Camera plate according to any one of Claims 1 to 3, wherein a device (3) for producing a mechanical bias in a direction substantially perpendicular to the surface of the camera plate is provided, so that a camera can be firmly clamped to the camera plate with a bias.

5. Camera plate according to any one of Claims 1 to 4, wherein the locking device (8) comprises the following elements:
a locking element (8b), which can engage in a correspondingly disposed opening (8e) at a camera underside,
a slide (8a), which is firmly connected to the locking element (8b) and which, together with the locking element (8b), is disposed such that it can move in the camera plate,
a device (8d), preferably a spring element, for producing a mechanical bias on the slide (8a) and the locking element (8b), so that the slide (8a) and the locking element (8b) are pulled into a "locked" position,
a release mechanism (11), which can inhibit and release a movement of the biased slide (8a) and locking element (8b), and
a securing device (8c), which prevents a movement of the slide (8a) and the locking element (8b) into a "non-locked" position as soon as these are in the "locked" position.

6. Camera plate according to any one of Claims 1 to 5, wherein the camera plate has at least one pin (11a), which is disposed in the region of the locking device (8), wherein the pin (11a) can move perpendicularly to the surface of the camera plate and is biased, so that the pin (11a) projects out of the surface of the camera plate and can be pushed in upon attaching a camera, wherein the pin (11a) releases the biased locking device (8) via a release mechanism (11), so that an attachable camera can be automatically locked.

7. Camera plate according to any one of Claims 4 to 6, wherein the device (3) for producing a mechanical bias is disposed in the camera plate and comprises the following elements:
a plate (3a), with which the mechanical bias can be exerted on a lug (5), which is fastened to an attachable camera (2), and
a spring element (3b), which is disposed below the plate (3a) and exerts a mechanical bias on the plate (3a).

8. Camera plate according to Claim 7 wherein the bias corresponds approximately to twice to three times a camera weight.

9. Camera stand, which comprises a stand and a camera plate, which is fastened to the top side thereof, for rapidly attaching a camera, wherein the camera plate is formed according to any one of Claims 1 to 8.

10. Portable camera with connecting means at its underside for fastening to a camera plate via at least one recess in the camera plate and a projection, which is provided in the recess and which co-operates with a lug at the camera, and for mechanically locking the camera to the camera plate,
**characterised in that**
the connecting means comprise first and second connecting means (5, 8), which are in each case disposed at opposite ends in the longitudinal direction of the camera,
the first connecting means comprise two lugs (5) at the camera, which are disposed at a spacing transversely to the longitudinal direction of the camera and which co-operate with a projection in the at least one recess in the camera plate, which projection is shaped as a bolt (9) which extends transversely to the longitudinal direction of the camera plate, such that substantially just one rotation of the camera about the bolt (9) as rotational axis is possible upon attaching the camera, and
the second connecting means (8) mechanically lock the camera to the camera plate upon attaching the end of the camera lying opposite the lugs (5).

11. Portable camera according to Claim 10, also **characterised by** electrical contact elements (11) at the underside of the camera for transmitting electrical signals via correspondingly disposed electrical contact elements (7) at the top side of a camera plate, which can be connected to the camera.

12. Portable camera according to Claim 11, wherein the camera only has a portion which can be connected to the camera plate (1) in the front and the rear region of its underside, and the electrical contact elements (11) are disposed both in the front region and in the rear region.

13. Connecting element, which can be fastened to an underside of the camera, for rapidly connecting a camera to a camera plate (1), comprising:
a fastening device (12) at the top side of the connecting element for fastening to the underside of a camera and
connecting means at the underside of the connecting element for fastening to a camera plate via at least one recess in the camera plate and a projection, which is provided in the recess and which co-operates with a lug at the connecting element,
**characterised in that**
the connecting element has two lugs, which co-operate with the projection of the at least one recess, which projection is shaped as a bolt (9) extending transversely to the longitudinal direction of the camera plate, such that substantially just one rotation of the camera about the bolt (9) as rotational axis is possible upon attaching the camera.

14. Connecting element according to Claim 13, with electrical contact elements (11), which are disposed at the underside of the connecting element, for transmitting electrical signals via correspondingly disposed contact elements (7) at the top side of a camera plate fit, which can be connected to the connecting element, and
electrical connections (10), which are provided at least at one outer side of the connecting element and are connected inside the connecting element to the electrical contact elements (11).

15. Connecting element according to any one of Claims 12 to 14, **characterised in that** the connecting element comprises two lugs 5, which are disposed in parallel in each case on one side of the connecting element.

16. Interface system for establishing a rapid mechanical connection between a camera and a stand, comprising:
a connecting element, which can be connected to an underside of a camera and has a lug (5), and
a camera plate (1), according to any of Claims 1 to 8.

## Revendications

1. Plaque support de caméra, susceptible d'être reliée à une caméra et à un pied, avec des moyens de liaison pour assurer la liaison de la caméra et de la plaque support de caméra, par l'intermédiaire d'au moins un évidement ménagé dans la plaque support de caméra et une saillie prévue dans l'évidement, coopérant avec un ergot susceptible d'être fixé à la caméra, et pour le verrouillage mécanique de la caméra à la plaque support de caméra,
**caractérisée en ce que**
les moyens de liaisons comprennent des premiers et deuxièmes moyens de liaison (9, 8) qui sont disposés chaque fois sur les extrémités opposées dans la direction longitudinale de la plaque support de caméra,
la saillie prévue dans l'au moins un évidement dans les premiers moyens de liaison (9) est formée sous forme de boulon (9) s'étendant transversalement à la direction longitudinale de la plaque support de caméra, boulon coopérant avec deux ergots (5) susceptibles d'être fixés sur la caméra, ergots espacés transversalement à la direction longitudinale de la plaque support de caméra, la coopération se faisant de manière que lors de la pose de la caméra, il ne soit possible pratiquement que d'effectuer une rotation d'un tour de la caméra autour du boulon (9) faisant office d'axe de rotation, et
les deuxièmes moyens de liaison (8) verrouillent mécaniquement la caméra sur la plaque support de caméra lors de la pose de l'extrémité de caméra opposée aux ergots (5).

2. Plaque support de caméra selon la revendication 1, **caractérisée en outre par**
des éléments de contact (7) électriques disposés en face supérieure de la plaque support de caméra, pour la transmission de signaux électriques par l'intermédiaire d'éléments de contact (11) disposés de manière correspondante, en face inférieure d'une caméra pouvant être reliée mécaniquement rigidement à la plaque support de caméra, et
des raccordements (3) électriques, disposés sur au moins une face extérieure de la plaque support de caméra et reliés à l'intérieur de la plaque support de caméra, aux éléments de contact (7) électriques se trouvant sur la plaque support de caméra.

3. Plaque support de caméra selon la revendication 1 ou 2, deux évidements étant chacun disposés latéralement sur l'extrémité avant de la plaque support de caméra et un boulon (9) cylindrique pénétrant dans chacun des évidements.

4. Plaque support de caméra selon l'une des revendications 1 à 3, un dispositif (3) étant prévu pour produire une précontrainte mécanique dans une direction sensiblement perpendiculaire à la surface de la plaque support de caméra, de manière qu'une caméra puisse être enserrée fermement sur la plaque support de caméra, sous l'effet d'une précontrainte.

5. Plaque support de caméra selon l'une des revendications 1 à 4, le dispositif de verrouillage (8) comprenant les éléments suivants :
un élément de verrouillage (8b) pouvant s'engager dans une ouverture (8e) disposée de manière correspondante, sur une face inférieure de caméra,
un coulisseau (8a) relié fermement à l'élément de verrouillage (8b) est disposé de façon mobile dans la plaque support de caméra, conjointement avec l'élément de verrouillage (8b),
un dispositif (8d), de préférence un élément élastique pour générer une précontrainte mécanique sur le coulisseau (8a) et l'élément de verrouillage (8b) de manière que le coulisseau (8a) et l'élément de verrouillage (8b) soient tirés en une position "verrouillée",
un mécanique de libération (11) pouvant bloquer et libérer un déplacement du coulisseau (8a) placé sous précontrainte et l'élément de verrouillage (8b), et
un dispositif de sécurité (8c) empêchant tout déplacement du coulisseau (8a) et de l'élément de verrouillage (8b) en une position "non verrouillée" dès que ceux-ci se trouve à la position "verrouillée".

6. Plaque support de caméra selon l'une des revendications 1 à 5, la plaque support de caméra présentant au moins une tige (11a), disposée dans la zone du dispositif de verrouillage (8), la tige (11a) étant mobile perpendiculairement à la face supérieure de la plaque support de caméra et placée sous une précontrainte faisant que la tige (11a) sort de la face supérieure de la plaque support de caméra et peut être enfoncée lors de la pose d'une caméra, la tige (11a) libérant par l'intermédiaire d'un mécanisme de libération (11) le dispositif de verrouillage (8) placé sous précontrainte de manière à pouvoir verrouiller automatiquement une caméra susceptible d'être posée.

7. Plaque support de caméra selon l'une des revendications 4 à 6, le dispositif (3) de production d'une précontrainte mécanique étant disposé dans la plaque support de caméra et comprenant les éléments suivants :
une plaque (3a) à l'aide de laquelle la précontrainte mécanique peut être exercée sur un ergot (5) fixé sur une caméra (2) pouvant être installée, et
un élément élastique (3b), disposé au-dessous de la plaque (3a) et exerçant une précontrainte mécanique sur la plaque (3a).

8. Plaque support de caméra selon la revendication 7, la précontrainte correspondant à peu près au double ou jusqu'au triple du poids d'une caméra.

9. Pied pour caméra, comprenant un pied et une plaque support de caméra fixée sur sa face supérieure, pour l'installation rapide d'une caméra, la plaque support de caméra étant réalisée selon l'une des revendications 1 à 8.

10. Caméra portative avec des moyens de liaison placés sur sa face inférieure, pour fixation sur une plaque support de caméra par l'intermédiaire d'au moins un évidement ménagé dans la plaque support de caméra et une saillie prévue dans l'évidement, saillie qui coopère avec un ergot placé sur la caméra, et pour le verrouillage mécanique de la caméra à la plaque support de caméra,
**caractérisée en ce que**
les moyens de liaison comprennent des premiers et deuxièmes moyens de liaison (5, 8), chacun disposés sur des extrémités opposées dans la direction longitudinale de la caméra,
les premiers moyens de liaison comprennent deux ergots (5) placés sur la caméra, qui sont espacés transversalement à la direction longitudinale de la caméra et ainsi coopèrent avec une saillie dans l'au moins un évidement ménagé dans la plaque support de caméra, formée sous la forme de boulon (9) s'étendant transversalement à la direction longitudinale de la plaque support de caméra, **en ce que** lors de l'installation de la caméra, il ne soit pratiquement possible que de faire tourner la caméra d'un tour autour du boulon (9) servant d'axe de rotation, et
les deuxièmes moyens de liaison (8) verrouillent mécaniquement la caméra sur la plaque support de caméra lors de la pose de l'extrémité opposée aux ergots (5).

11. Caméra portative selon la revendication 10, **caractérisée en outre par** des éléments de contact (11) électriques placés en face inférieure de la caméra afin de transmettre des signaux électriques par l'intermédiaire d'éléments de contact (7) électriques disposés de manière correspondante, sur la face supérieure d'une plaque support de caméra pouvant être reliée à la caméra.

12. Caméra portative selon la revendication 11, la caméra présentant uniquement dans la zone avant et la zone arrière de sa face inférieure un tronçon susceptible d'être relié à la plaque support de caméra (1) et les éléments de contact (11) électriques étant disposés tant dans la zone avant qu'également dans la zone arrière.

13. Elément de liaison, susceptible d'être fixé en face inférieure de la caméra, pour assurer une liaison rapide d'une caméra à une plaque support de caméra (1), comprenant :
un dispositif de fixation (12) en face supérieure de l'élément de liaison afin d'assurer une fixation à la face inférieure d'une caméra, et
des moyens de liaison, placés en face inférieure de l'élément de liaison pour assurer la fixation sur une plaque support de caméra, par l'intermédiaire d'au moins un évidement ménagé dans le plaque support de caméra et d'une saillie prévue dans l'évidement, qui coopère avec un ergot se trouvant sur l'élément de liaison,
**caractérisés en ce que**
l'élément de liaison présente deux ergots qui coopèrent avec la saillie du au moins un évidement, formé sous la forme d'un boulon (9) s'étendant transversalement à la direction longitudinale de la plaque support de caméra d'une manière faisant que lors de l'installation de la caméra, il ne soit possible pratiquement que de faire un tour de rotation à la caméra autour du boulon (9) servant d'axe de rotation.

14. Eléments de liaison selon la revendication 13, avec des éléments de contact (11) électriques disposés en face inférieure de l'élément de liaison, pour assurer la transmission de signaux électriques par des éléments de contact (7) disposés de manière correspondante, sur la face supérieure d'une plaque support de caméra (1) susceptible d'être reliée à l'élément de liaison, et
des raccordements (10) électriques prévus en au moins une face extérieure de l'élément de liaison et reliés aux éléments de contact (11) électriques, à l'intérieur de l'élément de liaison.

15. Eléments de liaison selon l'une des revendications 12 à 14, **caractérisés en ce que** l'élément de liaison présente deux ergots (5) disposés parallèlement prévus chacun sur un côté de l'élément de liaison.

16. Système d'interface pour établir une liaison mécanique rapide entre une caméra et un pied, comprenant :
un élément de liaison susceptible d'être fixé en face inférieure d'une caméra et présentant un ergot (5), et
une plaque support de caméra (1) selon l'une des revendications 1 à 8.
